Europäisches Patentamt

European Patent Office

Office européen des brevets

(11) Publication number: **0 228 130**
**B1**

(12) **EUROPEAN PATENT SPECIFICATION**

(45) Date of publication of patent specification: **23.01.91**

(21) Application number: **86202274.6**

(22) Date of filing: **16.12.86**

(51) Int. Cl.⁵: **A 01 G 9/24, F 16 L 9/02**

(54) Apparatus for heating a hot-house.

(30) Priority: **18.12.85 NL 8503474**

(43) Date of publication of application:
**08.07.87 Bulletin 87/28**

(45) Publication of the grant of the patent:
**23.01.91 Bulletin 91/04**

(84) Designated Contracting States:
**AT BE CH DE ES FR GB GR IT LI LU NL SE**

(56) References cited:
**BE-A- 427 763**
**BE-A- 562 902**
**DE-A-1 781 262**
**NL-A-7 604 515**

(73) Proprietor: **VBF BUIZEN BV**
**P.O. Box 39**
**NL-4900 BB Oosterhout (NL)**

(72) Inventor: **Lesuis, Ronald, Ir.**
**Peppelbeemd 3**
**NL-4907 GT Oosterhout (NL)**

(74) Representative: **Zuidema, Bert, Ir. et al**
**p/a HOOGOVENS GROEP B.V. P.O. Box 10.000**
**NL-1970 CA IJmuiden (NL)**

Courier Press, Leamington Spa, England.

EP 0 228 130 B1

## Description

The invention relates to apparatus for heating a hot-house for growing plants in beds, having a system of hot water pipes including pairs of pipes which extend parallel to each other and horizontally between beds of plants and serve as rails of a track on which a transport vehicle runs.

Such apparatuses are much used in hot-house horticulture (see for example NL—A—7 604 515). Known arrangements employ heating pipes of bright steel tube of cylindrical cross-section. Typical dimensions of the pipe are an external diameter of 51 mm and a wall thickness of 2.2 mm. Per metre length, such a pipe has a heat-emitting outer surface area of about 0.16 $m^2$, and an internal water capacity of about 0.0017 $m^3$.

Most heating systems in hot-house horticulture are over-dimensioned, and have an over-capacity of for example 20 to 25%. It would therefore be possible to use a smaller diameter cylindrical heating pipe, but for its other function, namely as a rail for the transport vehicle, such a pipe would be too weak.

The object of the present invention is to provide an apparatus for heating a hot-house as set out above in which the above problems are avoided.

According to the invention, the apparatus is characterized in that the hot water pipes which serve as rails have, as seen in cross-section, a flat horizontal bottom, flat vertical sides and a curved top wall joining the sides, with the height of the pipe greater than its width, the rails fitting into rectangular slots provided in support means for the rails.

By the invention it is thus proposed to use upright rectangular heating pipes, which in comparison with the known cylindrical pipes, have an almost identical heat radiating surface but a reduced internal water capacity, and yet have sufficient rigidity to withstand bending under the passage of the load of the transport vehicle.

Because of the more appropriate heat radiating surface of the pipes in the invention, efficient energy management can be effected in a hot-house, while the reaction time of the heating system to heating demands is significantly reduced because of the reduced water capacity of the pipes employed. This reaction time is especially essential for modern climate management in hot-house horticulture.

Another advantage of the invention is that the rectangular lower part of the pipe section makes support of the pipes more stable. In this respect, it is preferred according to the invention, that the pipes are supported and located by support members having rectangular recesses to receive the rectangular lower parts of the pipes. Preferably the recesses have a depth of approximately half the pipe height. This appears to give satisfactory lateral support for the upright rectangular pipe.

A suitable material for the pipe is steel, e.g. low-carbon steel, and preferred ranges for the dimensions of the pipes used in the invention are:

height 30 to 70 mm, more preferably 40 to 60 mm;

width 12 to 30 mm, more preferably 15 to 25 mm;

radius of top wall 8 to 15 mm;

wall thickness 1.5 to 2.5 mm.

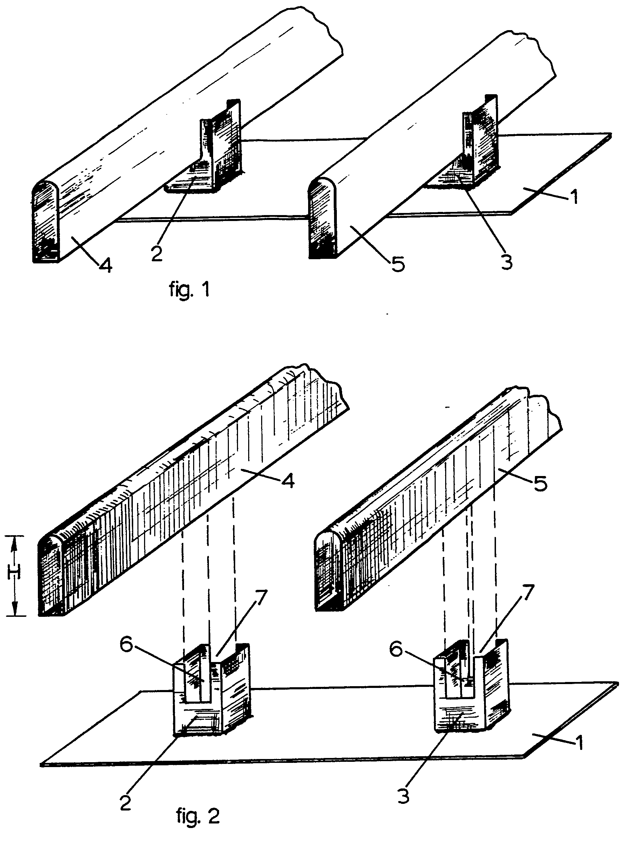

An embodiment of the apparatus is described below by way of example with reference made to the schematic drawing in which Figures 1 and 2 show in perspective respectively a pair of supported heating pipes for a hot-house, and for clarity the same pair of heating pipes separated from their supports.

Figures 1 and 2 show only those parts of an apparatus for heating of a hot-house for growing plants in beds, with which the invention is concerned. The heat source (for example a hot-water boiler and pump), the beds and the plants as well as the surrounding hot-house construction are omitted from the figures. A system of horizontally extending hot water pipes, supported above the floor of the hot-house, is located along a path between the beds. A metal base plate 1 which lies on the ground or floor of the hot-house is shown in the figures, onto which two upstanding supports made from for example square tube sections are fastened by welding. The pair of heating pipes 4 and 5 are each made from an upright rectangular pipe with a round top surface, a so-called tunnel section. Such pipes are already known for the manufacture of furniture. The height of the pipes 4 and 5 is in this example 50 mm and their width 20 mm, with a wall thickness of 2 mm. The top wall of the pipe has a radius of curvature of 10 mm. The pair of pipes 4 and 5 lie parallel to each other with a spacing of a few decimetres, for example 4.2 dm, so that they can serve as rails for a transport vehicle (not shown) which can be moved between the beds or rows of plants for servicing of the crop.

Such pipes may be made for example by a high-frequency (HF) welding process, from low carbon steel with a yield strength of 300 $N/mm^2$. This pipe has a slightly lower bending strength than the cylindrical pipe mentioned above, but is still sufficiently rigid to support a vehicle of about 300 kg weight where the longitudinal spacing (along the pipes) of the pipe supports is 2.25 m.

The supports 2 and 3 each have rectangular recesses 6 and 7 on opposite sides of their upper edges, visible in the exploded view of Figure 2, to receive the rectangular undersides of the pipes 4 and 5. The depth of these recesses is about half the height (H) Figure 2) of the pipes, i.e. 25 mm in the numerical example given, and the width of the recesses 6 and 7 corresponds with the lateral dimension of the pipes 4 and 5 so that the pipes 4 and 5 are laterally supported.

A tunnel pipe of the dimensions given has per metre length a heat radiating surface of about 0.13 $m^2$ with an internal water capacity of about 0.001 m³. Taking into account the usual over-dimensioning of the hot water source, the surface area reduction of about 20% compared with the cylindrical pipes described above is not objectionable, whilst due to the greatly reduced water capacity the heating system can react much more quickly to heat demands.

## Claims

1. Apparatus for heating a hot-house for growing plants in beds, having a system of hot water pipes (4, 5) including pairs of pipes which extend parallel to each other and horizontally between beds of plants and are shaped such that they serve as rails of a track on which a transport vehicle runs, characterized in that said hot water pipes (4, 5) which serve as rails have, as seen in cross-section, a flat horizontal bottom, flat vertical sides and a curved top wall joining the sides, with the height of the pipe greater than its width, the rails fitting into rectangular slots provided in support means for the rails.

2. Apparatus according to claim 1 wherein said pipes (4, 5) which serve as rails are supported and located by support members (2) having rectangular recesses (6, 7) which receive the lower parts of the pipes and correspond in shape thereto.

3. Apparatus according to claim 2 wherein the depth of said recesses (6, 7) is equal to about half the height (H) of the pipe (4, 5).

4. A hot-house for growing plants in beds, having apparatus according to any one of claims 1 to 3.

## Patentansprüche

1. Vorrichtung zum Heizen eines Gewächshauses für den Anbau von Pflanzen in Beeten, welche ein System von Heißwasserrohren (4, 5) mit Paaren von Rohren besitzt, die sich parallel zueinander und horizontal zwischen Pflanzenbeeten erstrecken und so ausgebildet sind, daß sie als Schienen eines Gleises dienen, auf dem ein Transportfahrzeug fährt, dadurch gekennzeichnet, daß die als Schienen dienenden Heißwasserrohre (4, 5), im Querschnitt gesehen, einen ebenen horizontalen Boden, ebene vertikale Seitenwände und eine die Seitenwände verbindende gekrümmte ober Wand besitzen, wobei die Höhe des Rohres größer als dessen Breite ist und die Schienen in in Schienenauflagern vorgesehene rechteckige Vertiefungen passen.

2. Vorrichtung nach Anspruch 1, bei welcher die genannten, als Schienen dienenden Rohre (4, 5) von Auflagerelementen (2) getragen und örtlich festgelegt werden, die rechteckige Ausnehmungen (6, 7) aufweisen, die die unteren Teile der Rohre aufnehmen und mit diesen in der Form übereinstimmen.

3. Vorrichtung nach Anspruch 2, bei welcher die Tiefe der genannten Ausnehmungen (6, 7) gleich ist etwa der Hälfte der Höhe (H) der Rohre (4, 5).

4. Gewächshaus für den Anbau von Pflanzen in Beeten, mit einer Vorrichtung nach irgendeinem der Ansprüche 1 bis 3.

## Revendications

1. Appareil pour chauffer une serre destinée à faire pousser des plantes dans des parterres, comportant un système de tuyaux (4, 5) d'eau chaude comprenant des paires de tuyaux qui s'étendent parallèlement les uns aux autres et horizontalement entre les parterres de plantes et sont profilés de manière à servir de rails d'une voie sur laquelle circule un véhicule de transport, caractérisé en ce que lesdits tuyaux (4, 5) d'eau chaude qui servent de rails ont, vus en section droite, une base horizontale plate, des côtés verticaux plats et une paroi supérieure courbé réunissant les côtés, la hauteur du tuyau étant supérieure à sa largeur, les rails s'encastrant dans des fentes rectangulaires formées dans un moyen de support pour les rails.

2. Appareil selon la revendication 1, dans lequel lesdits tuyaux (4, 5) servant de rails sont supportés et positionnés par des éléments de support (2) comportant des évidements rectangulaires (6, 7) destinés à recevoir les parties inférieures des tuyaux et étant de forme correspondante.

3. Appareil selon la revendication 2, dans lequel la profondeur desdits évidements (6, 7) est égale à environ la moitié de la hauteur (H) des tuyaux (4, 5).

4. Serre destinée à faire pousser des plantes dans des parterres, ayant l'appareil selon l'une quelconque des revendications 1 à 3.

fig. 1

fig. 2